# EUROPÄISCHE PATENTSCHRIFT

(11) **EP 1 277 534 B1**
(45) Veröffentlichungstag und Bekanntmachung des Hinweises auf die Patenterteilung: **03.11.2004**
(21) Anmeldenummer: 02014179.2
(22) Anmeldetag: 01.07.2002
(51) Int. Cl.: B23B 47/28

(54) **Dübellehre**
Dowel jig
Gabarit pour chevilles

(30) Priorität: 17.07.2001 DE 10134580
(43) Veröffentlichungstag der Anmeldung: 22.01.2003
(73) Patentinhaber: Pöckl Ursula, 5322 Hof Nr. 85 (AT)
(72) Erfinder: Pöckl Ursula, 5322 Hof Nr. 85 (AT)
(74) Vertreter: Haft, von Puttkamer, Berngruber, Czybulka

(56) Entgegenhaltungen:
- US-A- 4 893 970
- US-A- 5 154 548
- US-A- 5 407 306
- US-A- 5 586 846

## Beschreibung

Die Erfindung bezieht sich auf eine Dübellehre, d. h. ein Gerät zur Bestimmung der Position und zum Führen des Bohrers beim Bohren der Bohrungen in insbesondere im Querschnitt rechteckige, beispielsweise plattenförmige Werkstücke, insbesondere Holzwerkstücke, in die Dübel eingesetzt werden, um die Werkstücke miteinander zu verbinden. Eine Dübellehre, die dem Oberbegriff von Anspruch 1 entspricht, wird z.B. in US-5 586 846 beschrieben.

Üblicherweise wird die Position der Dübelbohrung oder -löcher mit einem Streichmaß am Werkstück angerissen, bevor sie in die Werkstücke, beispielsweise Bretter, von Hand oder mit der Handbohrmaschine gebohrt werden, die durch Dübel miteinander verbunden werden sollen.

Um Bretter miteinander fluchtend zu verbinden, ist es auch bekannt, nach dem Bohren der Dübelbohrungen in das eine Brett Bolzen mit einer Markierspitze in diese Dübelbohrungen zu stecken, dann das zweite Brett fluchtend anzuordnen und die Markierspitzen in das zweite Brett zu drücken, um die Stellen zu markieren, in die die Dübelbohrungen in das zweite Werkstück gebohrt werden.

Es ist bereits ein kelleartiges Gerät mit mehreren Bohrerführungen zum Bohren der Dübelbohrungen in Bretter bekannt. Zur Bildung einer Eckverbindung wird ein Dübel an einer Brettstirnseite angebracht, auf den die Kelle gesteckt wird, worauf ein Winkelanschlag von der Griffseite her gegen das Brett geschoben und fixiert wird, um die weiteren Dübelbohrungen zu bohren. Die Handhabung dieses Gerätes ist außerordentlich kompliziert. Auch lassen sich keine exakt fluchtenden Verbindungen herstellen.

Aufgabe der Erfindung ist es, eine Dübellehre bereitzustellen, welche bei einfachem Aufbau leicht zu handhaben ist und zur exakt fluchtenden Verbindungen führt.

Dies wird erfindungsgemäß durch die im Anspruch 1 angegebene Dübellehre erreicht. In den Unteransprüchen sind vorteilhafte Ausgestaltungen der erfindungsgemäßen Dübellehre wiedergegeben.

Mit der erfindungsgemäßen Dübellehre ist die Position des Bohrers beim Bohren der Bohrlöcher für die Dübel sehr einfach und genau bestimmbar. Die Dübellöcher können damit schnell und genau in die Werkstücke gebohrt werden.

Die erfindungsgemäße Dübellehre ist zwar in erster Linie für Holzwerkstücke bestimmt, jedoch ist sie auch für Werkstücke aus anderen Materialien einsetzbar, die im Querschnitt rechteckig sind, also wenigstens eine rechtwinklige Kante aufweisen, an die die beiden Schenkel des Winkelprofils der Dübellehre angelegt werden können. Die Holzwerkstücke können z. B. Bretter, Balekn oder Leisten sein.

Mit der erfindungsgemäßen Dübellehre ist es möglich, Dübelbohrungen mit einer Handbohrmaschine, in welche ein Holzdübelbohrer eingespannt ist, zu bohren. Durch die Bohrerführung können von Hand bzw. mit einer Handbohrmaschine mit Holzdübelbohrer exakte Dübellöcher gebohrt werden, welche horizontal und vertikal gerade und in einem Winkel von 90° zur Holfläche verlaufen.

Die erfindungsgemäße Dübellehre besteht aus zwei Teilen. Das eine Teil ist ein aus zwei plattenförmigen Schenkeln gebildetes rechtwinkliges Winkelprofil. Beim Bohren von Dübelbohrungen an der Stirnseite oder am Rand der Fläche eines Brettes oder dergleichen plattenförmigen Werkstücks werden beide Schenkel an dem Brett bzw. plattenförmigen Werkstück zur Anlage gebracht, d. h. die Kante zwischen der Stirnseite und der Fläche des rechteckigen Werkstücks wird von den beiden Schenkeln umschlossen.

Das Winkelprofilstück besteht vorzugsweise aus Metall, insbesondere Aluminiumwerkstoff. Das Winkelprofil weist in jedem der beiden plattenförmigen Schenkel eine Bohrung auf, ferner mindestens drei Skalen, nämlich jeweils eine an den freien Enden der beiden Schenkel, also Skalen, die sich quer, d. h. über die Breite der plattenförmigen Schenkel erstrecken und eine dritte Skala, die sich an einer Längsseite eines der beiden Schenkel, also in dessen Längsrichtung erstreckt. Die Skalen werden vorzugsweise durch einen Strichmaßstab gebildet, wobei die Striche zumindest zum Teil Zahlen aufweisen können.

Das andere Teil ist die Bohrerführung, die vorzugsweise durch eine Hülse gebildet wird, die wahlweise mit einer der beiden Bohrungen in den beiden Schenkeln des Winkelprofils lösbar verbindbar ist, beispielsweise durch Einschrauben der mit einem Außengewinde versehenen Hülse in ein Innengewinde in oder an der Bohrung.

Die Bohrerführung bzw. Hülse kann zugleich einen Anschlag für einen Tiefenanschlagring bilden, der am Bohrer befestigt wird. Die Bohrerführung bzw. Hülse besteht vorzugsweise aus gehärtetem Stahl.

Der zweite Schenkel des Winkelprofils (also der, ohne Skala an der Längsseite) ist vorzugsweise kürzer als der erste Schenkel mit der Skala an der Längsseite, da der zweite Schenkel meistens an der Stirnseite des plattenförmigen Werkstücks in Anschlag gebracht wird und damit kürzer ausgebildet werden kann.

Die Bohrung in dem ersten Schenkel weist von dessen Längskante mit der Skala vorzugsweise einen Abstand auf, der dem Abstand zwischen der Ecke des Winkelprofils und der Bohrung in dem zweiten Schenkel entspricht. Diese Maßnahme ist notwendig, wenn Dübellöcher auf der Fläche eines Werkstoffs gebohrt werden sollen, um das Werkstück T-förmig mit einem zweiten Werkstück zu verbinden.

Die Bohrung in dem ersten Schenkel (mit der Skala an der Längsseite) ist in Längsrichtung vorzugsweise in der Mitte zwischen der Winkelprofilkante und dem Ende des ersten Schenkels angeordnet. Ferner ist vorzugsweise die Bohrung in dem zweiten Schenkel (ohne Skala an der Längsseite) in Querrichtung in der Mitte angeordnet. Auch weisen die Skalen an den freien Enden der beiden Schenkel vorzugsweise in der Mitte einen Nullpunkt auf, von dem aus sich der Strichmaßstab auf beide Seiten wie bei einem Geodreieck symmetrisch erstreckt.

An dem freien Ende der beiden Schenkel ist an deren Außenfläche ein sich zu einer Kante verjüngender Materialabtrag vorgesehen. Der Materialabtrag kann beispielsweise durch eine Abschrägung gebildet sein. Damit können die Skalen an den freien Enden der beiden Schenkel bis zu dem Werkstück eingesehen werden. Da man beim Bohren mit der Bohrführung in der Bohrung an der Längsseite des ersten Schenkels die Stirnfläche zwischen der Außen- und der Innenfläche des ersten Schenkels sieht, ist die Skala an der Längsseite an der Stirnfläche zwischen der Außen- und der Innenfläche des ersten Schenkels vorgesehen, wobei sich die Striche dieser Skala vorzugsweise ganz oder nahezu bis zur Innenfläche des ersten Schenkels erstrecken können.

Vorzugsweise ist in dem ersten Schenkel eine sich in Querrichtung erstreckende Öffnung vorgesehen, die vorzugsweise an ihrem Rand einen Nullpunkt trägt, der mit der Bohrung in dem zweiten Schenkel fluchtet. Damit können beispielsweise an der Gehrung, z. B. bei einem Rahmen, die Dübellöcher gebohrt werden. Von dem Nullpunkt aus kann sich in Querrichtung des ersten Schenkels, vorzugsweise in beiden Richtungen eine Skala entlang dieser Öffnung erstrecken. Diese Öffnung ist vorzugsweise an dem dem zweiten Schenkel zugewandten Ende des ersten Schenkels angeordnet.

Nachstehend ist die erfindungsgemäße Dübellehre anhand der Zeichnung beispielhaft näher erläutert. Darin zeigen:

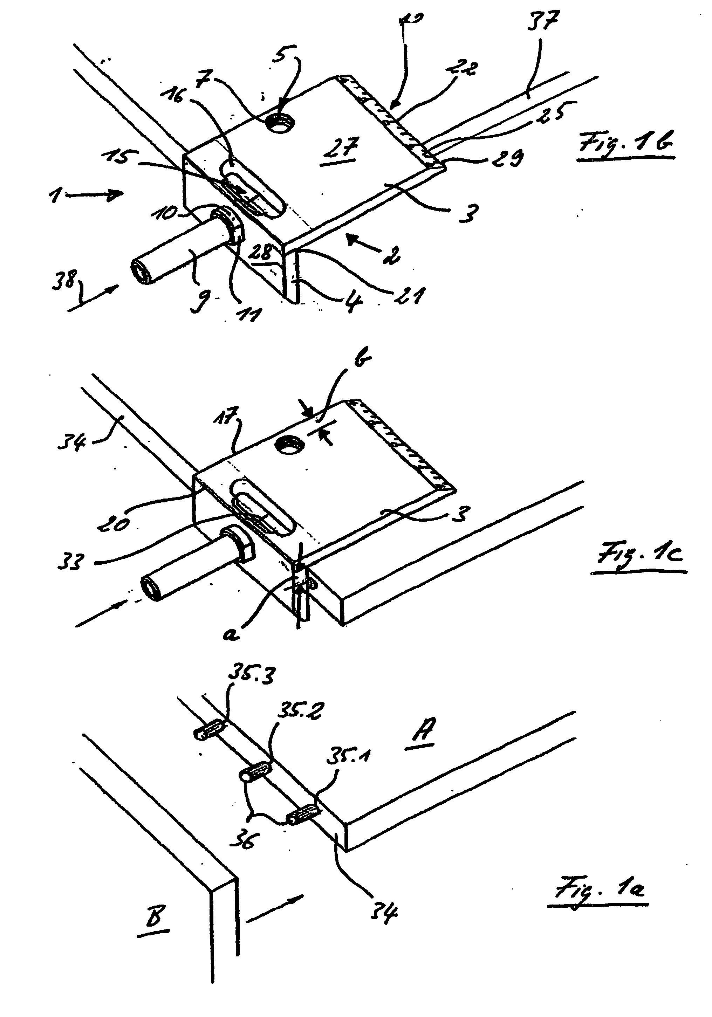

Figur 1a, 2a, 3a 4a und 5a jeweils die herzustellende Verbindung zweier Bretter A und B; und
Figur 1b und 1c
bzw. 2b und 2c,
bzw. 3b und 3c,
bzw. 4b und 4c,
bzw. 5b und 5c die jeweilige Anlage der Dübellehre an dem Brett A bzw. B zum Bohren der Dübel-Bohrungen für die Verbindungen gemäß Figuren 1a, 2a, 3a, 4a bzw. 5a

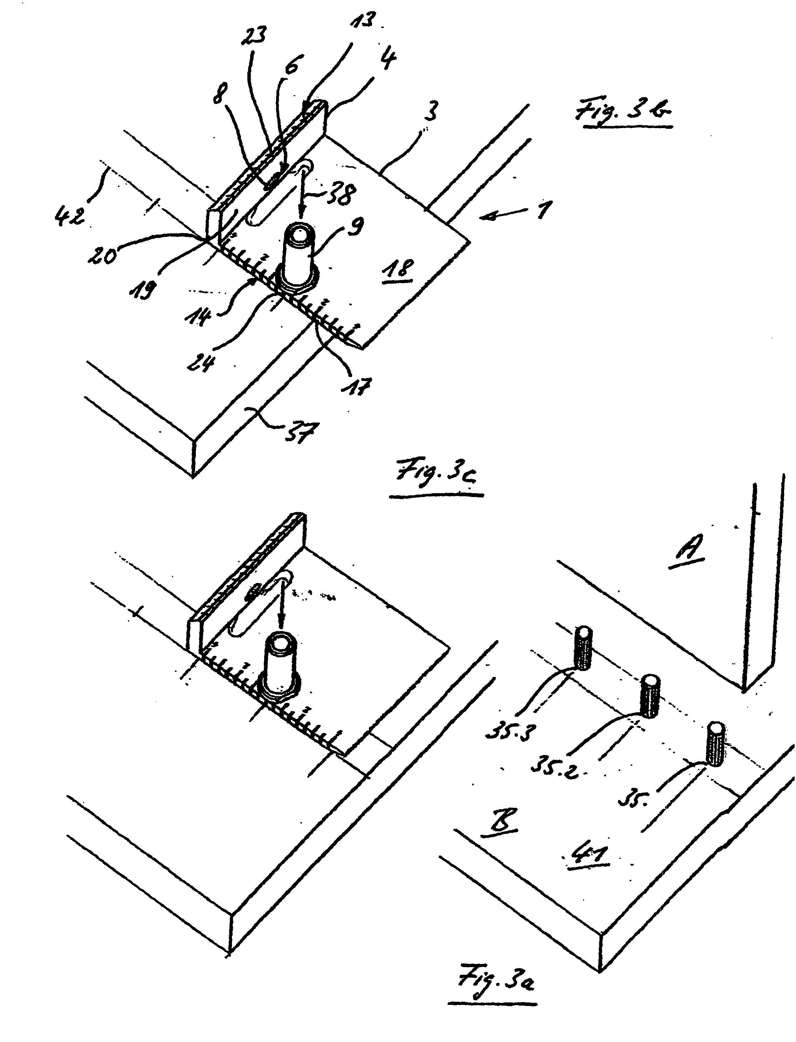

Die Dübellehre 1 besteht gemäß Figur 1b aus einem rechtwinkligen Winkelprofil 2 mit einem ersten plattenförmigen Schenkel 3 und einem zweiten dazu senkrechten plattenförmigen Schenkel 4. Jeder Schenkel 3, 4 ist mit einer Bohrung 5, 6 versehen, wobei die Bohrung 6 z. B. in Figur 3b zu sehen ist. Die Bohrungen 5, 6 weisen ein Innengewinde 7, 8 auf. Eine mit einem Außengewinde versehene hülsenförmige Bohrerführung 9 ist wahlweise in die eine bzw. andere Bohrung 5, 6 einschraubbar.

Die hülsenförmige Bohrerführung 9 ist mit einem ringförmigen Anschlag 10 versehen, der mit gegenüberliegenden tangentialen Flächen 11 für einen Schraubenschlüssel versehen ist.

Wie beispielsweise aus Figur 1b und 3b ersichtlich, weist das Winkelprofil vier Skalen auf. Die erste Skala 12 ist an dem freien Ende des ersten Schenkels 3 vorgesehen, die zweite Skala 13 an dem freien Ende des zweiten Schenkels 4, die dritte Skala 14 an der einen Längsseite des ersten Schenkels 3 und die vierte Skala 15 in einer Öffnung 16 im ersten Schenkel 3.

Der erste Schenkel 3 ist länger ausgebildet als der zweite Schenkel 4.

Die Bohrung 5 in dem ersten Schenkel 3 weist von dessen Längskante 17 mit der dritten Skala 14 einen Abstand b auf, der dem Abstand a zwischen der Ecke 21 zwischen der Innenfläche 18 des ersten Schenkels und der Innenfläche 19 des zweiten Schenkels und der Bohrung 6 in dem zweiten Schenkel 4 entspricht. Die Bohrung 5 in dem ersten Schenkel 3 ist in Längsrichtung des ersten Schenkels 3 in der Mitte zwischen der Winkelprofilkante 20 und dem Ende des ersten Schenkels 3 mit der ersten Skala 12 angeordnet. Ebenso ist die Bohrung 6 in dem zweiten Schenkel in Querrichtung in der Mitte des zweiten Schenkels 4 angeordnet.

Die Skalen 12, 13 an den Enden des ersten Schenkels 3 und des zweiten Schenkels 4 weisen in Querrichtung des Schenkels 3 bzw. 4 in der Mitte den Nullpunkt 22, 23 auf. Die Skalen 12 bis 15 werden durch Strichmaßstäbe mit Strichen mit ¼-Zentimeterabständen gebildet, wobei die Zentimeterstriche mit Zahlen versehen sind.

Die Skala 14 an der Längskante 17 des ersten Schenkels 3 weist ihren Nullpunkt 24 in der Mitte zwischen der Winkelprofilkante 20 und dem Ende des ersten Schenkels 3 mit der Skala 12 auf.

Die Enden des ersten und des zweiten Schenkels 3, 4 des Winkelprofils 2 sind durch eine Abschrägung 25, 26 z. B. durch Materialabtragung an der Außenfläche 27 bzw. 28 zu einer Kante 29 bzw. 30 verjüngt. Von der Kante 29 bzw. 30 erstrecken sich die Striche der Skalen 12, 13 in die Abschrägung 25, 26. Demgegenüber ist die Skala 14 an der Längsseite des ersten Schenkels 3 an der Stirnfläche zwischen der Außenfläche 27 und der Innenfläche 18 des ersten Schenkels 3 vorgesehen, wobei sich die Striche der Skala 14 von der Innenfläche 18 zur Außenfläche 27 hin erstrecken.

Die Öffnung 16 in dem ersten Schenkel 3 weist an ihrem einen Längsrand einen Nullpunkt 33 der sich in Querrichtung erstreckenden Skala 15 auf, wobei der Nullpunkt 33 mit der Mitte der Bohrung 6 in dem zweiten Schenkel 4 fluchtet. Die Öffnung 16 ist dabei in der in dem zweiten Schenkel 4 zugewandten Ende des ersten Schenkels 3 angeordnet. Anstelle einer Skala kann auch nur der Nullpunkt 33 an der Öffnung 16 vorgesehen sein.

Um die Eckverbindung zwischen den Brettern oder dergleichen Teile A und B gemäß Figur 1a herzustellen, werden in die Stirnseite 34 des Teils A Bohrlöcher 35.1, 35.2, 35.3 gebohrt, in die Dübel 36 gesteckt werden.

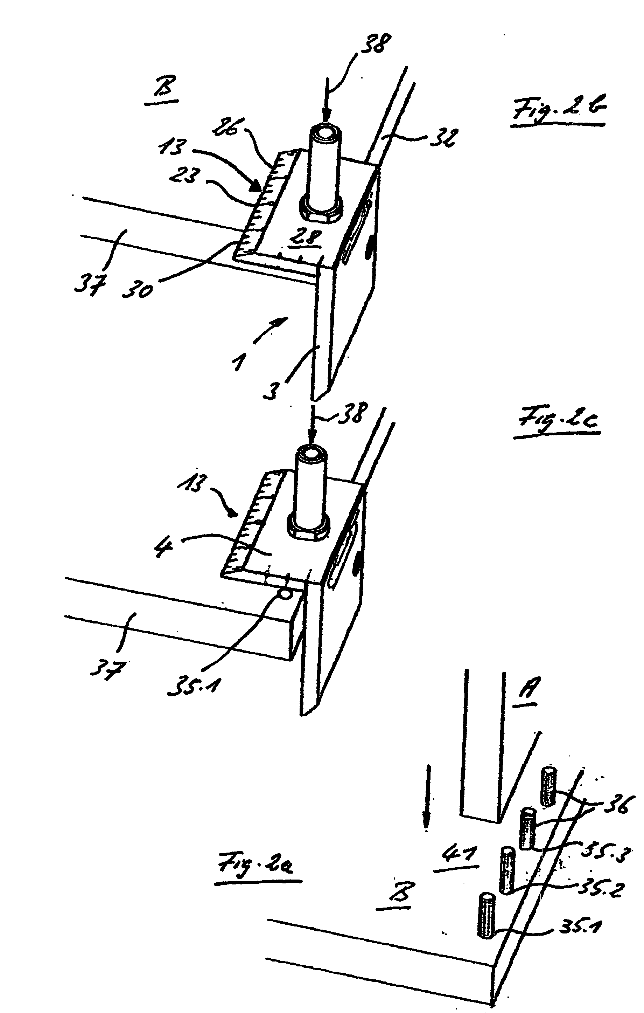

Ferner werden am Rand der dem Teil A zugewandten Fläche des Teiles B mit den Bohrlöchern 35.1, 35.2, 35.3 (in Figur 1a nicht dargestellte) fluchtende Dübellöcher gebohrt und zwar so, wie nachstehend im Zusammenhang mit Figur 2a, 2b und 2c beschrieben.

Zum Bohren der Dübellöcher 35.1, 35.2, 35.3 in das Teil A wird gemäß Figur 1b die Bohrerführung 9 in die Bohrung 6 in dem kurzen Schenkel 4 der Dübellehre 1 geschraubt. Dann wird mit der Skala 12 der gewünschte Abstand des ersten Bohrlochs 35.1 in dem Teil A von der seitlichen Stirnfläche 37 gemessen, worauf das erste Bohrloch 35.1 durch Einführen des nicht dargestellten Bohrers gemäß dem Pfeil 38 in die Bohrerführung 9 gebohrt wird. Die Tiefe des Dübellochs 35.1 wird dabei durch einen Tiefenanschlagring auf den Bohrer bestimmt.

Bei geringem Abstand des zweiten Bohrlochs 35.2 von dem ersten Bohrloch 35.1 wird gemäß Figur 1c der kurze Schenkel 4 seitlich an das erste Bohrloch 35.1 gehalten. Bei einem größeren Bohrlochabstand wird der Abstand mit einem Metermaß aufgezeichnet und die Skala 12 mit dem Nullpunkt 22 an den aufgezeichneten Riss gehalten. Die Skala 12 wird also zum Bohren der Bohrlöcher 35.1, 35.2, 35.3 an der Stirnfläche 34 eines Brettes oder dergleichen plattenförmigen Teils A verwendet.

Die Skala 13 wird zum Bohren am Rand der Fläche des Brettes oder Teiles B verwendet, wie in Figur 2b und 2c dargestellt. Dazu wird die Dübellehre 1 mit dem langen Schenkel 3 an die Stirnfläche 32 des Brettes B angelegt. Der Abstand des ersten Bohrlochs 35.1 von der seitlichen Stirnfläche 37 wird mit der Skala 13 gemessen, worauf das erste Bohrloch 35.1 durch Einführen des Bohrers gemäß dem Pfeil 38 gebohrt wird.

Bei geringem Abstand des zweiten Bohrlochs 35.2 von dem ersten Bohrloch 35.1 wird gemäß Figur 2c der kurze Schenkel 4 seitlich an das erste Bohrloch 35.1 angelegt. Bei einem größerem Bohrlochabstand wird der Abstand mit einem Meterstab aufgezeichnet und die Skala 13 mit dem Nullpunkt 23 nach den Rissen gehalten.

Nach Figur 3a werden die Bretter oder Teile A und B T-förmig mit den Dübeln 36 verbunden. Dazu werden die Bohrlöcher 35.1, 35.2, 35.3 in die Fläche 41 des Teils B gebohrt, in die die Dübel 36 gesteckt werden. Ferner werden in die der Fläche 41 zugewandte Stirnseite des Brettes A Bohrlöcher gebohrt, wie im Zusammenhang mit Figur 1a, 1b und 1c näher erläutert.

Zum Bohren der Bohrlöcher 35.1, 35.2, 35.3 in die Fläche 41 des Teils B wird gemäß Figur 3b und 3c die Bohrerführung 9 in die Bohrung 5 in dem langen Schenkel 3 geschraubt. Dabei wird die Skala 14 an der Längskante 17 des langen Schenkels 3 der Dübellehre 1 zum Bohren verwendet.

Es wird der Riss 42 auf die Fläche 41 gezeichnet. Zum Bohren des ersten Bohrlochs 35.1 wird die Längskante 17 an den Riss 42 gehalten und der Abstand von der seitlichen Stirnfläche 37 mit der Skala 14 gemessen, worauf das erste Bohrloch 35.1 durch Einführen des Bohrers gemäß dem Pfeil 38 gebohrt wird.

Zum Bohren der übrigen Bohrlöcher 35.2, 35.3 wird mit der Skala 14 der gewünschte Abstand von Bohrloch 35.1 gemessen.

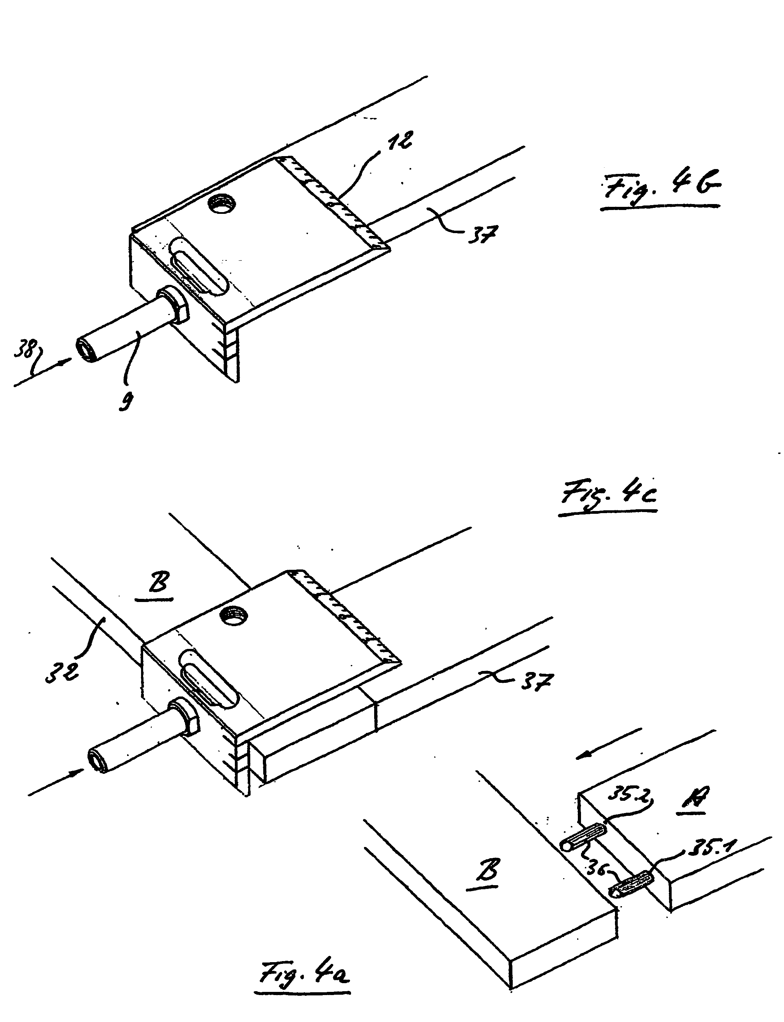

Um eine Eckverbindung zwischen den Brettern oder dergleichen plattenförmigen Teilen A und B gemäß Figur 4a z. B. für einen flachen Rahmen herzustellen, wird gemäß Figur 4b (wie in Figur 1b und 1c) die Bohrerführung 9 in die Bohrung 6 geschraubt und die Skala 12 zum Bohren der Bohrlöcher 35.1, 35.2 verwendet.

Das erste Bohrloch 35.1 im Teil A wird dann durch Anhalten der Skala 12 an die eine Seitenfläche 37 des Brettes A gemäß Figur 4b und das zweite Bohrloch 35.2 durch Anhalten der Skala 12 an die andere Seitenfläche in die Stirnfläche 32 gebohrt.

Um die (nicht dargestellten) Bohrlöcher in der Stirnfläche 32 des Teiles B zu bohren, wird das Teil A seitlich fluchtend an das Teil B gelegt, wie in Figur 4c dargestellt. Das Teil A dient damit zum Ablesen der Distanz der Bohrlöcher in dem Teil B von den beiden Seitenflächen des Teils A.

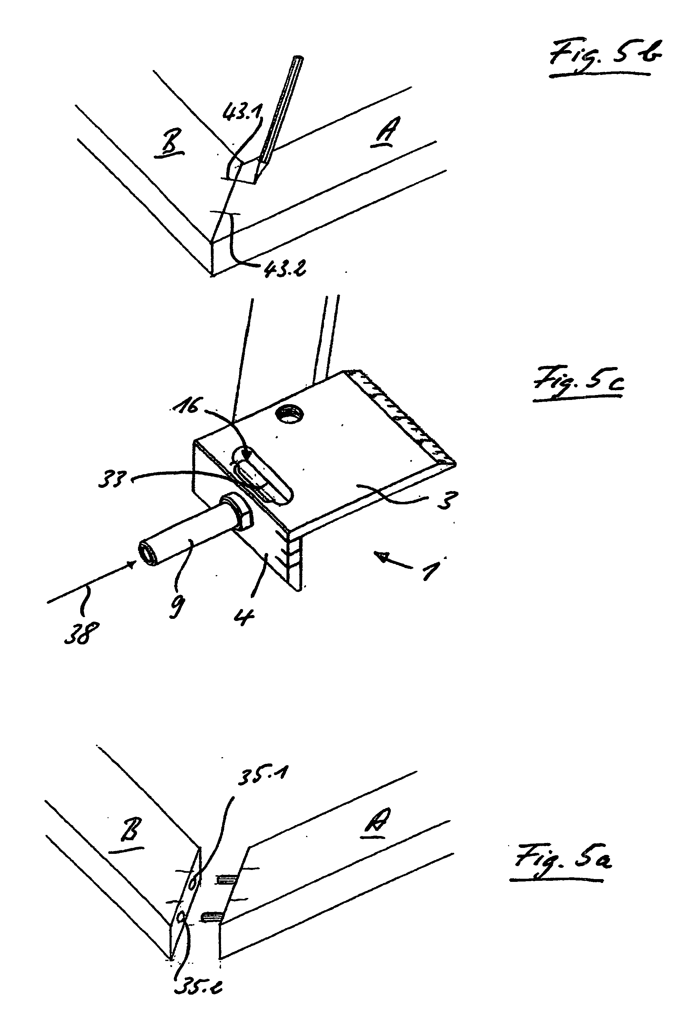

Die Skala 15 bzw. der Nullpunkt 33 in der schlitzförmigen Öffnung 16 in dem langen Schenkel 3 der Dübellehre 1 dient zum Bohren der Bohrlöcher 35.1, 35.2 für Eckverbindungen, beispielsweise eine Eckverbindung mit Gehrung gemäß Figur 5a z. B. für einen flachen Rahmen. Die Bohrerführung 9 wird dabei in die Bohrung 6 in dem kurzen Schenkel 4 der Dübellehre 1 geschraubt.

Dann werden die beiden Teile A und B, die miteinander verbunden werden sollen, zusammengelegt und die Position der Bohrlöcher 35.1, 35.2 für die Dübel 36 wird mit den Strichen 43.1 und 43.2 auf den Teilen A und B angezeichnet.

Gemäß Figur 5c wird der Nullpunkt 33 in der Öffnung erst auf den angezeichneten Strich 43.1 und dann auf den Strich 43.2 gehalten, um die Dübellöcher 35.1 bzw. 35.2 zu bohren.

Statt des Nullpunktes 33 können rechts und links vom Nullpunkt 33 weitere Strichmaßeinheiten vorgesehen sein, um z. B. statt der beiden Striche 43.1 und 43.2 von einem Strich in der Mitte ausgehend die beiden Bohrlöcher 35.1 und 35.2 zu bohren.

## Patentansprüche

1. Dübellehre aus einem Winkelprofil (2) mit einem ersten Schenkel (3) und einem zweiten dazu senkrechten Schenkel (4), die jeweils mindestens eine Skala aufweisen, **dadurch gekennzeichnet, daß** beide Schenkel jeweils mit mindestens einer Bohrung (5, 6) versehen sind, an der eine Bohrerführung (9) von außen lösbar befestigbar ist, wobei jeweils eine Skala (12, 13) an den Enden der beiden Schenkel (3, 4) und eine Skala (14) an wenigstens einer Längsseite des ersten Schenkels (3) vorgesehen ist.

2. Dübellehre nach Anspruch 1, **dadurch gekennzeichnet, dass** der erste Schenkel (3) länger ausgebildet ist als der zweite Schenkel (4).

3. Dübellehre nach Anspruch 1 oder 2, **dadurch gekennzeichnet, dass** die Bohrung (5) in dem ersten Schenkel (3) von dessen Längskante (17) einen Abstand (b) aufweist, der dem Abstand (a) zwischen der Ecke (21) des Winkelprofils (2) und der Bohrung (6) in dem zweiten Schenkel (4) entspricht.

4. Dübellehre nach Anspruch 3, **dadurch gekennzeichnet, dass** die Längskante (17) des ersten Schenkels (3), an der die Bohrung (5) im Abstand (b) angeordnet ist, die eine Skala (14) aufweist.

5. Dübellehre nach einem der vorstehenden Ansprüche, **dadurch gekennzeichnet, dass** die Bohrung (5) in dem ersten Schenkel (3) in Längsrichtung in der Mitte zwischen der Winkelprofilkante (20) und dem Ende des ersten Schenkels (3) angeordnet ist.

6. Dübellehre nach einem der vorstehenden Ansprüche, **dadurch gekennzeichnet, dass** die Bohrung (6) in dem zweiten Schenkel (4) in Querrichtung in der Mitte angeordnet ist.

7. Dübellehre nach einem der vorstehenden Ansprüche, **dadurch gekennzeichnet, dass** die Skalen (12, 13) an den Enden der beiden Schenkel (3, 4) den Nullpunkt (22, 23) in Querrichtung in der Mitte aufweisen.

8. Dübellehre nach einem der vorstehenden Ansprüche, **dadurch gekennzeichnet, dass** die Skala (14) an der Längsseite des ersten Schenkels (3) den Nullpunkt (24) in der Mitte zwischen der Winkelprofilkante (20) und dem Ende des ersten Schenkels (3) aufweist.

9. Dübellehre nach einem der vorstehenden Ansprüche, **dadurch gekennzeichnet, dass** das Ende des ersten und/oder zweiten Schenkels (3, 4) durch Materialabtrag (25, 26) an seiner Außenfläche (27, 28) zu einer Kante (29, 30) verjüngt ist, welche mit der Skala (12, 13) versehen ist.

10. Dübellehre nach einem der vorstehenden Ansprüche, **dadurch gekennzeichnet, dass** die Skala (14) an der Längsseite des ersten Schenkels (3) an der Stirnfläche zwischen der Innenfläche (18) und der Außenfläche (27) des ersten Schenkels (3) vorgesehen ist.

11. Dübellehre nach Anspruch 10, **dadurch gekennzeichnet, dass** sich die Skala (14) von Innenfläche (18) zur Außenfläche (27) des ersten Schenkels (3) erstreckt.

12. Dübellehre nach einem der vorstehenden Ansprüche, **dadurch gekennzeichnet, dass** der erste Schenkel (3) eine Öffnung (16) mit einem Nullpunkt (33) aufweist, der mit der Bohrung (3) in dem zweiten Schenkel (4) fluchtet.

13. Dübellehre nach Anspruch 12, **dadurch gekennzeichnet, dass** der Nullpunkt (33) der Nullpunkt einer sich in Querrichtung des ersten Schenkels (3) erstreckenden Skala (15) bildet.

14. Dübellehre nach Anspruch 12 oder 13, **dadurch gekennzeichnet, dass** die Öffnung (16) an der dem zweiten Schenkel (4) zugewandten Seite des ersten Schenkels (3) angeordnet ist.

15. Dübellehre nach Anspruch 1, **dadurch gekennzeichnet, dass** die Bohrerführung (9) durch eine Hülse gebildet wird.

16. Dübellehre nach Anspruch 1, **dadurch gekennzeichnet, dass** die Bohrerführung (9) zur lösbaren Befestigung mit einem Außengewinde zum Einschrauben in ein Innengewinde (7, 8) an der Bohrung (5, 6) versehen ist.

17. Dübellehre nach Anspruch 1, **dadurch gekennzeichnet, dass** das Winkelprofil (2) aus einem Aluminumwerkstoff besteht.

18. Dübellehre nach Anspruch 1, **dadurch gekennzeichnet, dass** die Bohrerführung aus Stahl besteht.

## Claims

1. A dowel gauge made of an angle section (2) with a first leg (3) and a second leg (4) perpendicular thereto, which each comprise at least one scale, **characterized in that** both legs are each provided with at least one bore (5, 6) to which a drill guide (9) can be fastened from the outside in a detachable manner, with one scale (12, 13) each being provided at the ends of the two legs (3, 4) and one scale (14) on at least one longitudinal side of the first leg (3)

2. A dowel gauge according to claim 1, **characterized in that** the first leg (3) is provided with a longer arrangement than the second leg (4).

3. A dowel gauge according to claim 1 or 2, **characterized in that** the bore (5) in the first leg (3) is provided with a distance (b) from its longitudinal edge (17), which distance (b) corresponds to the distance (a) between the corner (21) of the angle section (2) and the bore (6) in the second leg (4).

4. A dowel gauge according to claim 3, **characterized in that** the longitudinal edge (17) of the first leg (3) on which bore (5) is arranged at a distance (b) comprises the one scale (14).

5. A dowel gauge according to one of the preceding claims, **characterized in that** the bore (5) in the first leg (3) is arranged in the longitudinal direction in the middle between the angle section edge (20) and the end of the first leg (3).

6. A dowel gauge according to one of the preceding claims, **characterized in that** the bore (6) is arranged in the second leg (4) in the transversal direction in the middle.

7. A dowel gauge according to one of the preceding claims, **characterized in that** the scales (12, 13) at the ends of the two legs (3, 4) comprise the zero point (22, 23) in the transversal direction in the middle.

8. A dowel gauge according to one of the preceding claims, **characterized in that** the scale (14) on the longitudinal side of the first leg (3) comprise the zero point (24) in the middle between the angular section edge (20) and the end of the first leg (3).

9. A dowel gauge according to one of the preceding claims, **characterized in that** the end of the first and/or second leg (3, 4) is tapered into an edge (29, 30) by removal of material (25, 26) on its outside surface (27, 28), which edge is provided with a scale (12, 13).

10. A dowel gauge according to one of the preceding claims, **characterized in that** the scale (14) on the longitudinal side of the first leg (3) is provided on the face side between the inside surface (18) and the outside surface (27) of the first leg (3).

11. A dowel gauge according to claim 10, **characterized in that** the scale (14) extends from the inside surface (18) to the outside surface (27) of the first leg (3).

12. A dowel gauge according to one of the preceding claims, **characterized in that** the first leg (3) comprises an opening (16) with a zero point (33) which is in alignment with the bore (3) in the second leg (4).

13. A dowel gauge according to claim 12, **characterized in that** the zero point (33) forms the zero point of a scale (15) extending in the transversal direction of the first leg (3)

14. A dowel gauge according to claim 12 or 13, **characterized in that** the opening (16) is arranged on the side of the first leg (3) facing the second leg (4).

15. A dowel gauge according to claim 1, **characterized in that** the drill guide (9) is formed by a sleeve.

16. A dowel gauge according to claim 1, **characterized in that** the drill guide (9) is provided for detachable fastening with an external screw thread for screwing into an internal screw thread (7, 8) on the bore.

17. A dowel gauge according to claim 1, **characterized in that** the angle section (2) consists of aluminium material.

18. A dowel gauge according to claim 1, **characterized in that** the drill guide consists of steel.

## Revendications

1. Gabarit de perçage constitué d'une cornière (2) avec une première branche (3) et une deuxième branche (4) perpendiculaire à la première, chacune d'elles comportant au moins une graduation, **caractérisé en ce que** les deux branches sont chacune munies d'au moins un trou (5, 6) auquel peut être fixé, depuis l'extérieur et de façon amovible, un guide de perçage (9), une graduation (12, 13) étant prévue à chacune des extrémités des deux branches (3, 4) et une graduation (14), sur au moins un long côté de la première branche (3).

2. Gabarit de perçage selon la revendication 1, **caractérisé en ce que** la première branche (3) est conformée pour être plus longue que la deuxième branche (4).

3. Gabarit de perçage selon la revendication 1 ou 2, **caractérisé en ce que** le trou (5) dans la première branche (3) est situé à une distance (b) de son bord longitudinal (17), cette distance correspondant à la distance (a) entre le coin (21) de la cornière (2) et le trou (6) percé dans la deuxième branche (4).

4. Gabarit de perçage selon la revendication 3, **caractérisé en ce que** le bord longitudinal (17) de la première branche (3) dans lequel est disposé le trou (5) à une distance (b) de celui-ci, comporte une graduation (14).

5. Gabarit de perçage selon l'une quelconque des revendications précédentes, **caractérisé en ce que** le trou (5) dans la première branche (3) est disposé, dans le sens longitudinal, au centre entre le bord (20) de la cornière et l'extrémité de la première branche (3).

6. Gabarit de perçage selon l'une quelconque des revendications précédentes, **caractérisé en ce que** le trou (6) est disposé au centre de la deuxième branche (4) dans le sens transversal.

7. Gabarit de perçage selon l'une quelconque des revendications précédentes, **caractérisé en ce que** les graduations (12, 13) pratiquées aux extrémités des deux branches (3, 4) présentent le point zéro (22, 23) au centre dans le sens transversal.

8. Gabarit de perçage selon l'une quelconque des revendications précédentes, **caractérisé en ce que** la graduation (14) pratiquée sur le long côté de la première branche (3) présente le point zéro (24) au centre entre le bord (20) de la cornière et l'extrémité de la première branche (3).

9. Gabarit de perçage selon l'une quelconque des revendications précédentes, **caractérisé en ce que** l'extrémité de la première et/ou de la deuxième branche (3, 4) va s'amincissant pour former un bord (29, 30) muni de la graduation (12, 13), cet amincissement étant obtenu par enlèvement de matière (25, 26) sur sa face externe (27, 28).

10. Gabarit de perçage selon l'une quelconque des revendications précédentes, **caractérisé en ce que** la graduation (14) est prévue sur le long côté de la première branche (3), sur la face d'extrémité entre la face interne (18) et la face externe (27) de la première branche (3).

11. Gabarit de perçage selon la revendication 10, **caractérisé en ce que** la graduation (14) s'étend depuis la face interne (18) jusqu'à la face externe (27) de la première branche (3).

12. Gabarit de perçage selon l'une quelconque des revendications précédentes, **caractérisé en ce que** la première branche (3) comporte un orifice (16) avec un point zéro (33) qui se trouve en ligne par rapport au trou (3) dans la deuxième branche (4).

13. Gabarit de perçage selon la revendication 12, **caractérisé en ce que** le point zéro (33) forme le point zéro d'une graduation (15) qui s'étend en travers de la première branche (3).

14. Gabarit de perçage selon la revendication 12 ou 13, **caractérisé en ce que** l'orifice (16) est disposé sur le côté de la première branche (3) qui fait face à la deuxième branche (4).

15. Gabarit de perçage selon la revendication 1, **caractérisé en ce que** le guide de perçage (9) est formé par un fourreau.

16. Gabarit de perçage selon la revendication 1, **caractérisé en ce que**, pour sa fixation amovible, le guide de perçage (9) est muni d'un filetage permettant son vissage dans un taraudage (7, 8) du trou (5, 6).

17. Gabarit de perçage selon la revendication 1, **caractérisé en ce que** la cornière (2) consiste en un matériau à base d'aluminium.

18. Gabarit de perçage selon la revendication 1, **caractérisé en ce que** le guide de perçage est en acier.
